(19)

Europäisches
Patentamt
European
Patent Office
Office européen
des brevets

(11) **EP 2 020 782 A1**

(12) **EUROPEAN PATENT APPLICATION**

(43) Date of publication:
**04.02.2009 Bulletin 2009/06**

(51) Int Cl.:
**H04L 12/56** (2006.01)    **H04L 12/40** (2006.01)
**H04L 12/46** (2006.01)

(21) Application number: **07015304.4**

(22) Date of filing: **03.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nokia Siemens Networks Oy**
**02610 Espoo (FI)**

(72) Inventor: **Ramalho Ribeiro dos Santos, José Miguel**
**1750-430 Lisboa (PT)**

(74) Representative: **Bruglachner, Thomas E.**
**Nokia Siemens Networks GmbH & Co. KG**
**Patentabteilung**
**Postfach 80 17 60**
**81617 München (DE)**

(54) **Method and device for ring protection and system comprising such device**

(57)    A method and a device for ring protection of a network are provided comprising the steps of (i) running a first method to identify at least one loop within the network; and (ii) a network component that is informed by the first method about a common network component that can be reached from the network component via different ports blocks one port and supports a ring protection.

FIG 3

EP 2 020 782 A1

**Description**

The invention relates to a method and a device for ring protection and to a system comprising such a device.

A Spanning Tree Protocol (STP IEEE 802.1D) is a common protocol used for protection in Ethernet Networks. Further developments of the Spanning Tree Protocol result in a Rapid Spanning Tree Protocol (RSTP IEEE 802.1w) and in a Multiple Spanning Tree Protocol (MSTP IEEE 802.1s).

An Ethernet Ring Protection (ERP) mechanism and protocol are disclosed in, e.g., EP 1 062 787 B1.

In rough outline, the ERP protocol works as follows:

One of a ring's nodes is assigned as a Ring Master (also referred to as Redundancy Manager, RM). Two ring ports on this Ring Master are configured as a primary (P) port and as a secondary (S) port. All other nodes of the ring are configured as Ring Slaves (RS). An ERP control VLAN for the purpose of sending and receiving ERP control messages is established over the ring. The Ring Master blocks its secondary port for all non-control traffic and sends "Hello" packets via the control VLAN; the packets are sent to both primary and secondary ring ports every configurable time (e.g., 50msec intervals).

Failure detection:

There are two modes of failure detection which can be employed simultaneously:

Alarm mode:

The failure is detected by one of the nodes adjacent to the failure. When a node detects that any of its ring ports has lost a link, it immediately sends a "linkdown" message via the control VLAN on its sound link. Failure detection in this mode is immediate, but the detection can only be performed by nodes that support ERP.

Sample mode:

The failure is detected by the Ring Master as a result of missing "Hello" packets. Since detection is performed by the Ring Master, it is fully interoperable with all other ERP or non-ERP nodes within the same ring, providing that the Ring Master is node capable of ERP.

Restoration:

When the Ring Master detects a failure (either by receiving a "linkdown" message or by missing "Hello packets") it

- Declares a failed state;
- Opens the logically blocked protected VLANs on the secondary port.
- Flushes its Forwarding Database (FDB);
- Sends an acknowledgement message: "linkdown Ack"

Upon receiving the "link down" message, all other nodes in the rings flush their FDBs. Destination-switching decisions are then re-learned according to a common Layer 2 learning mechanism. In the basic configuration described above, a typical ring may be operational again in less than 50msec.

Since the Ring Master's secondary port is now open, service frames, will be routed via the alternative path.

Reverting to normal:

When a node notices that a failed ring port is up again, it

- Puts all the protected VLANs on the repaired port in a temporarily blocked state; and
- Sends a "link up" message to the Ring Master.

Upon receiving the "link up" message, the Ring Master

- Blocks the protecting VLANs on its secondary port; and

- Sends a "link up Ack" message to all other nodes.

Upon receiving a "link up", the transit nodes

- Flush their Forwarding Database (FDB); and
- Switch their blocked transit links to the normal forwarding state.

Ring topologies are known in carrier Ethernet networks, in particular because some approaches may meet the 50ms recovering time. Examples of such ring topologies are:

- RPR IEEE 802.17;
- ERP (Ethernet Ring Protection);
- EAPS (Ethernet Automatic Protection Switching);
- Ring Spanning Tree.

These approaches need to be pre-configured well in advance to running a network.

The object to be solved is to overcome the disadvantages as stated before and to provide a method and a device able to automatically configure a network with ring protection.

This problem is solved according to the features of the independent claims. Further embodiments result from the depending claims.

In order to overcome this problem a method for ring protection of a network is provided comprising the steps:

- running a first method to identify at least one loop within the network;
- a network component that is informed by the first method about a common network component that can be reached from the network component via different ports blocks one port and supports a ring protection.

Hence, the network component is informed that it can be reached from a common network component via different paths. Such a loop situation should be avoided in a network comprising several network components. The network component blocks one of its ports such that it can only be reached via the remaining (open) port thereby supporting ring protection mechanisms, such as, e.g., Ethernet ring protection (ERP).

This approach advantageously allows an automatic configuration or set-up of a network enabling ring protection mechanisms.

As an embodiment, the method further comprises the steps:

- the network component requests a control VLAN from the common network component;
- the common network grants the control VLAN;
- the network component informs intermediate network components located in a path between the network component and the common network component about the network component.

Preferably, the network component then acts as a redundancy manager according to a ring protection protocol. The control VLAN (virtual local area network) is a VLAN over which control messages are sent and received. Advantageously, the control VLAN is not blocked.

As a further embodiment, the network component conveys the following information to the intermediate network components:

- the control VLAN;
- a primary port of the network component;
- a secondary port of the network component.

This information allows the intermediate network components to configure themselves for ring protection.

In addition, an information of an instance, in particular of a set of VLANs is conveyed to the intermediate network components by the network component.

This allows to operate multiple instances of ring protection protocols. The instance, e.g., the set of VLANs, indentifies the entity to be protected.

As another embodiment, the network component receives acknowledges from intermediate network components.

In yet another embodiment, the network component sends test packets via the control VLAN to the intermediate network components and to the common network component.

With an intermediate network component receiving a test packet, this intermediate network component becomes aware that a ring protection protocol is active.

Next, it is an embodiment that the first method operates according to a spanning tree protocol (STP), in particular according to a multiple spanning tree protocol (MSTP) or according to a rapid spanning tree protocol (RSTP).

It is also an embodiment that the method can be used for configuration, set-up, maintenance and/or operation of the network.

Further, it is an embodiment that the network component, the common network component and/or the intermediate network components is/are of the following type, respectively:

- a switch;
- a router;
- a gateway.

The object stated supra is also solved by a device used for ring protection, the device comprising a processor unit that is equipped and/or arranged such that the method as described herein can be run on said processor.

Preferably, the device can be a communication device, in particular any network component. Such network component can further be of the following type:

- a switch;
- a router;
- a gateway.

In an additional embodiment, the device operates at least partially as a redundancy manager according to a ring protection protocol.

Said ring protection protocol can preferably be an Ethernet ring protection protocol.

The objective stated above is also reached by providing a communication system comprising at least one device as described herein.

Embodiments of the invention are shown and illustrated in the following figures:

Fig.1 shows a diagram comprising steps to be executed in order to reach ring protection;

Fig.2 shows a diagram of elements of an adjusted bridge protocol data unit (BPDU);

Fig.3 shows a ring topology to illustrate the method for ring protection in more detail;

Fig.4 shows control VLAN request and grant sent in the ring topology according to Fig.3;

Fig.5 shows an ERP network component configuration as performed in a ring topology according to Fig.3.

Fig.6 shows a (physical) network comprising 16 network components (nodes) comprising a cluster of none-ERP compliant nodes;

Fig.7 shows an exchange of bridge protocol data units (BPDUs) in the network of Fig.6;

Fig.8 shows an exchange of control VLAN requests (and grants) in the network topology as set forth in Fig.6;

Fig.9 shows an active topology configuration of ERP protocols pursuant according to the topology of Fig.6.

A network component that may be a switch according to a particular embodiment would block one of its ports pursuant to a loop detected by this network component. Basically, loops shall be avoided. Each blocked link within the network may thus protect a ring of network components.

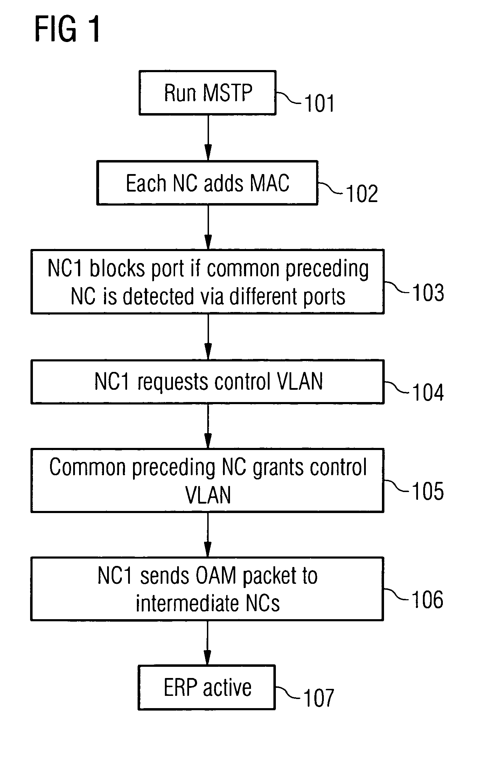

**Fig.1** shows steps to be executed to enable ring protection.

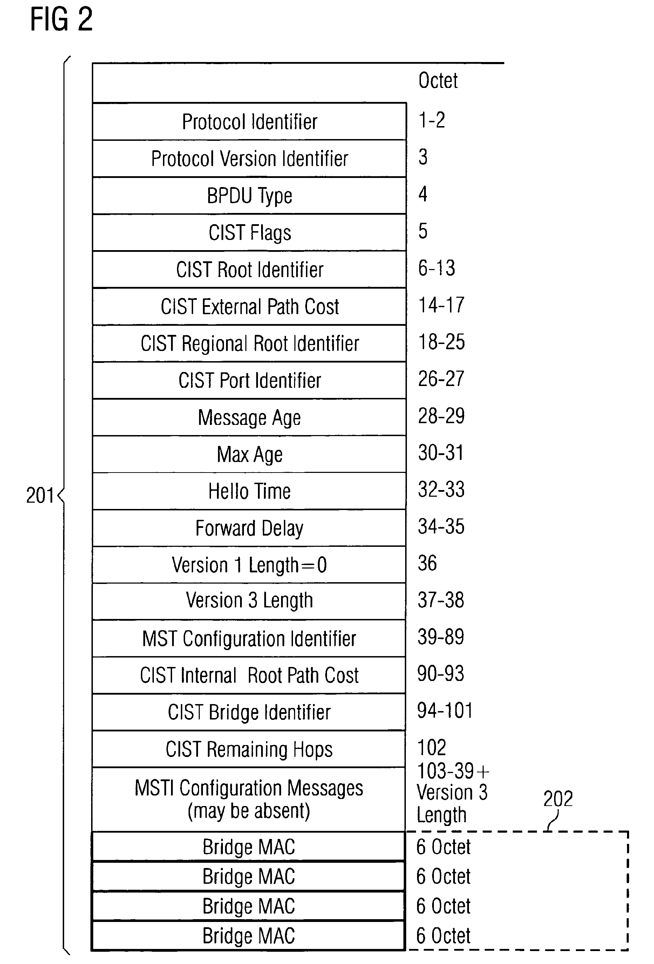

a) In a step 101 a multiple spanning tree (MSTP) protocol is run with a modified bridge protocol data unit (BPDU). This adjusted BPDU is shown in **Fig.2,** reference 201: A block 202 of four bridge MAC addresses is added at the end of a BPDU 201.

b) These additional bridge MAC addresses are used in a step 102 according to which each network component (NC) adds its MAC address. This will result in a first network component NC1 receiving all MAC addresses of intermediate NCs of a particular path.

c) In a step 103, the first network component NC1 blocks one of its ports in case it detects that it can be reached from a common NC via different paths or - in other words - if a common NC can be reached from the first network component NC1 via different ports (i.e. paths).

d) In a step 104, the first network component NC1 requests a control VLAN from the common NC.

e) The common NC grants such control VLAN in a step 105.

f) Then, the first network component NC1 in a step 106 sends an operation and maintenance packet (OAM packet) to intermediate network components thereby informing these intermediate network components that ring protection, in particular Ethernet ring protection (ERP), is active (step 107).

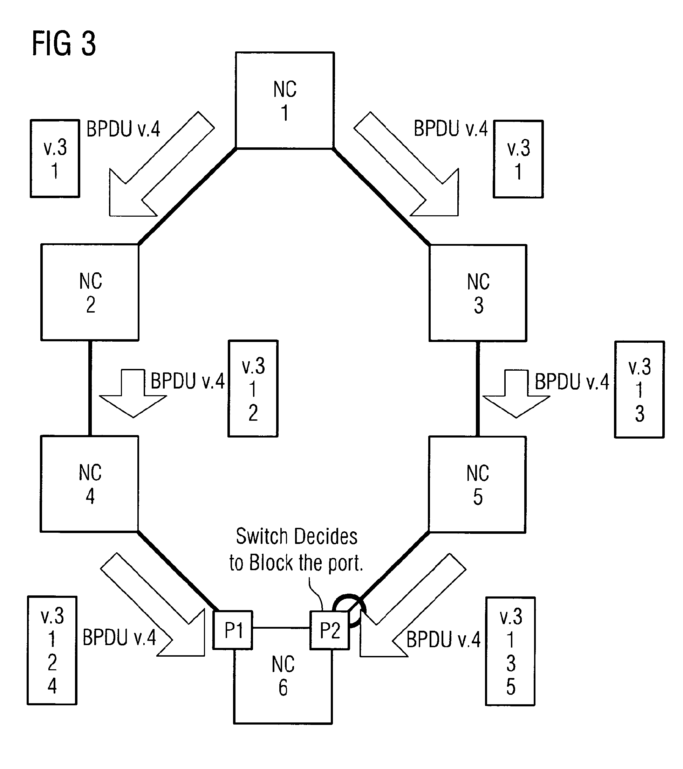

**Fig.3** shows a ring topology to illustrate the method for ring protection in more detail. All network components NC1, NC2, NC3, NC4, NC5 and NC6 can be realized as switches.

The network component NC1 is also referred to as common network component, because the two communication paths

i) NC1 - NC2 - NC4 - NC6; and

ii) NC1 - NC3 - NC5 - NC6

arriving at NC6 both have network component NC1 as common origin (root).

In comparison to an usual xSTP-operation, the BPDU packet is changed as shown in Fig.2 by adding Bridge MAC addresses (see block 202 in Fig.2).

The network component NC6 decides which port to block. Subsequently, the network component NC6 verifies if the network components support a ring protection protocol such as, e.g., Ethernet ring protection (ERP).

From the perspective of network component NC6, the last common network component is NC1, the first path (see i) above) leads via network components NC2 and NC4 and an alternative path (see ii) above) leads via network components NC3 and NC5.

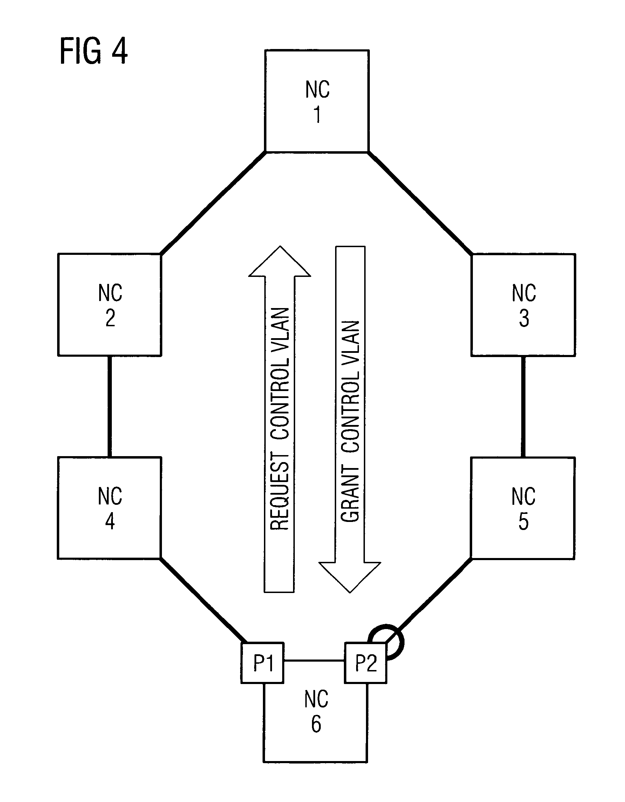

If all network components in the loop support ring protection like, e.g., ERP, the network component NC6 as shown in **Fig.4** requests a control VLAN from the common network component NC1 (also referred to as root bridge in this case) or from the first common network component that supports ring protection (in case the root bridge does not support ring protection).

The VLAN requested is to be used for control purposes within the protected ring, e.g., according to the ERP protocol.

This request assures that all control VLANs are unique throughout the entire network.

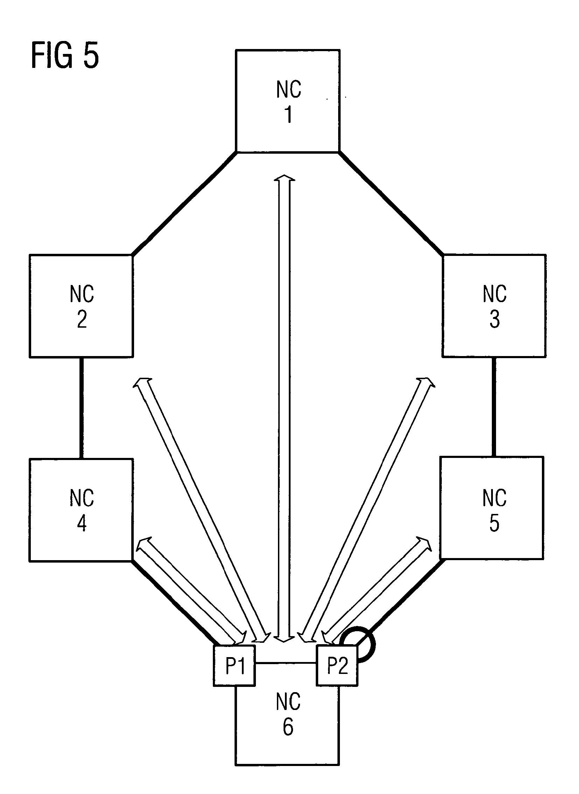

After having a control VLAN granted by the common network component NC1, as shown in **Fig.5,** the network component NC6 informs the other switches that a protected ring can be configured or set-up. In case of ERP, the network component NC6 requests to become a Redundancy Manager (RM) of the ring.

There is more than one way to notify the network components of the ring to start operation as a protected ring (e.g., an ERP ring). The network component NC6 that is about to become the Redundancy Manager is aware of every other network component of this ring. This is ensured by the network component NC6 receiving such information via its two ports: Via a port P1, the network component NC6 received the MAC addresses of the network components NC1, NC2 and NC4. Via a port P2, the network component NC6 receives the MAC addresses of the network components NC1, NC3 and NC5. This information allows the switch to define the ring. From the port P1 towards the port P2 the ring will be as follows:

$$\texttt{NC6} \Rightarrow \texttt{NC4} \Rightarrow \texttt{NC2} \Rightarrow \texttt{NC1} \Rightarrow \texttt{NC3} \Rightarrow \texttt{NC5.}$$

In general networks, the ring from a primary port P1 towards a secondary port P2 can be construed as follows:

The network component itself

↓

The last MAC in the BPDU received at the port P1

↓

...

↓

The last common MAC received at both ports P1, P2

↓

(continued)

All MAC addresses after the last common MAC received at port P2 in the same order

With this information collected, it is possible to configure the network components of the ring sending

- The control VLAN;
- Information relating to the primary port P1 (or a possibility for a network component to determine the primary port P1 on its own);
- Information relating to the secondary port P2 (or a possibility for a network component to determine the secondary port P2 on its own).

After the network component NC6, here acting as the Redundancy Manager, receives acknowledges from the network components NC1, NC2, NC4, NC3, NC5, it starts a normal ERP operation sending test packets within the control VLAN obtained from the common network component NC1.

When a network component receives such a test packet, it is aware that the ring is operational in ERP mode.

Preferably, prior to switching to ERP mode, protection mechanisms according to 802.1 can be implemented (e.g., in case of failure before the ERP can even be set up).

Another advantage of this approach is a compatibility between ERP and xSTP as well as various versions of STP.

Furthermore, multiple instances of the ERP can work in parallel as described supra. In addition to the approach comprising a single ERP protocol, the information required to configure the network components of the ring is slightly different, i.e. such information preferably comprises:

- The control VLAN;
- Information relating to the primary port P1 (or a possibility for a network component to determine the primary port P1 on its own);
- Information relating to the secondary port P2 (or a possibility for a network component to determine the secondary port P2 on its own);
- An instance (i.e., a set of VLANs) that is to be protected.

Preferably, this additional information "instance" (set of VLANs) is made available via MSTP.

The approach described herein in particular shows the following advantages:

- The network can be automatically configured, set up and/or maintained.
- This approach is compliant with previous versions of the Spanning Tree Protocol (STP).
- Further, this approach assures that the secondary link of the Redundancy Manager is not a shared link.

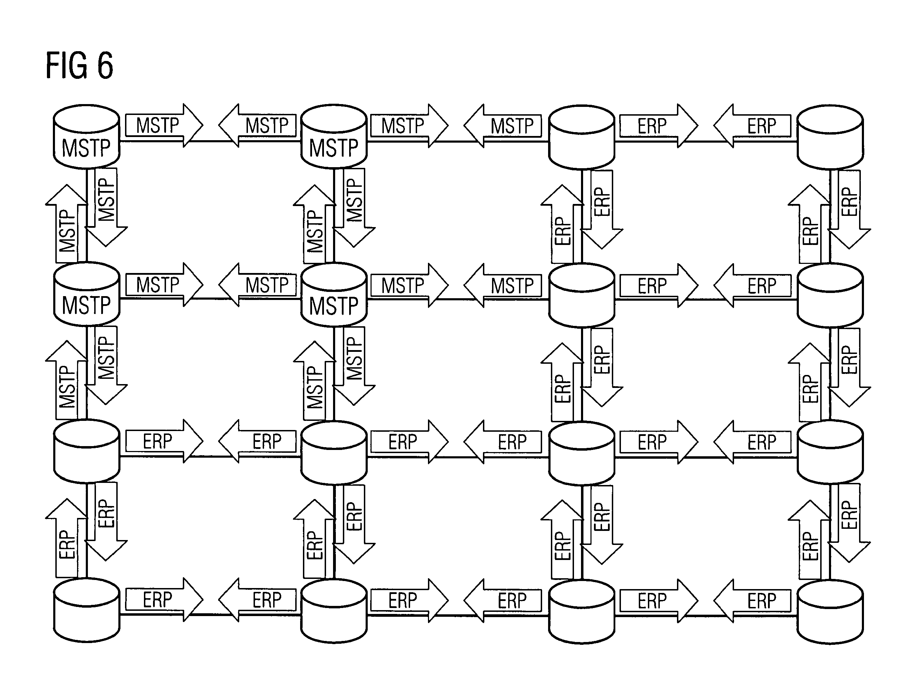

**Fig.6** shows a (physical) network comprising 16 network components (nodes). The four nodes in the upper left corner are MSTP-compliant nodes that are not compatible with Ethernet ring protection. The remaining nodes are compatible with ERP, but are also capable of sending and/or receiving MSTP protocol data units.

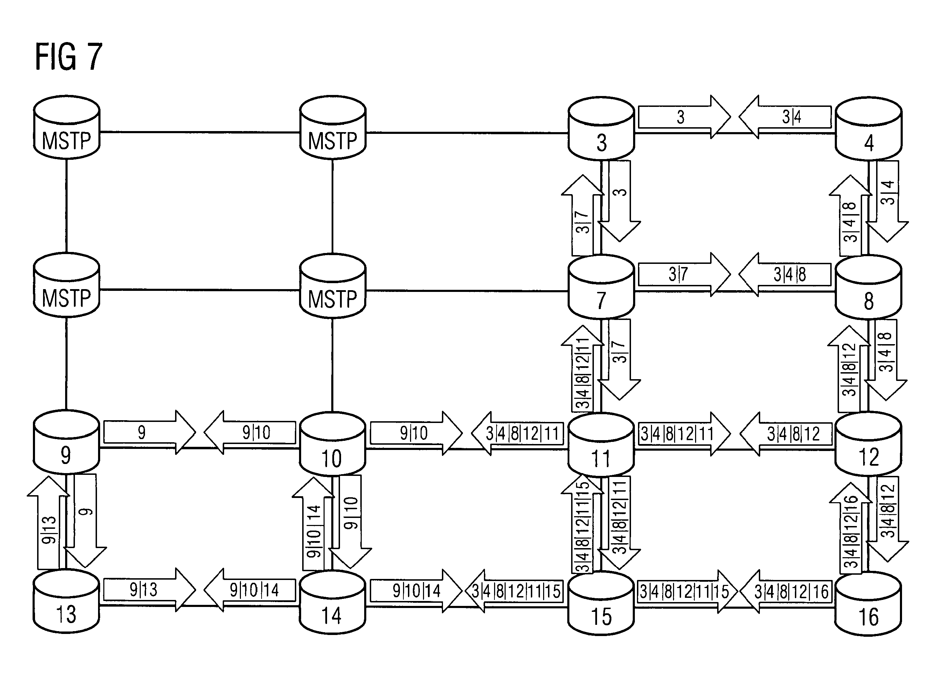

As set forth in this approach, the nodes compatible of ERP exchange extended bridge protocol data units (BPDUs) as shown in **Fig.7,** thereby informing the adjacent ERP-compatible nodes about their respective predecessor (s) by incorporating the predecessor's(s') MAC address(es) in the BPDUs. This information can be used to identify the ring topology of those nodes that are compatible with ERP.

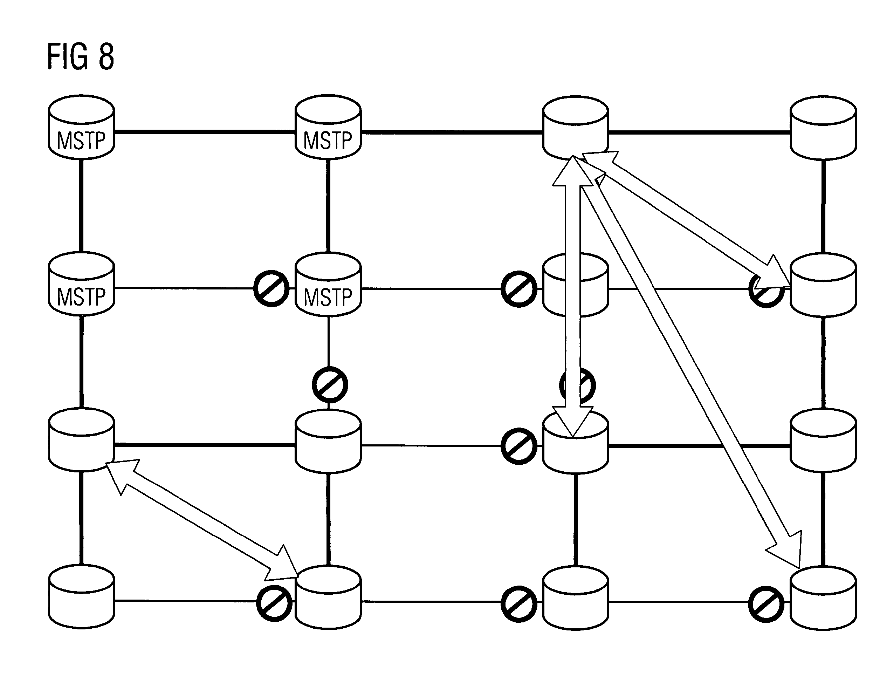

As shown in **Fig.8,** the network components that can be reached via different paths (ports of the respective network component) exchange control VLAN requests and grants with the respective common network component.

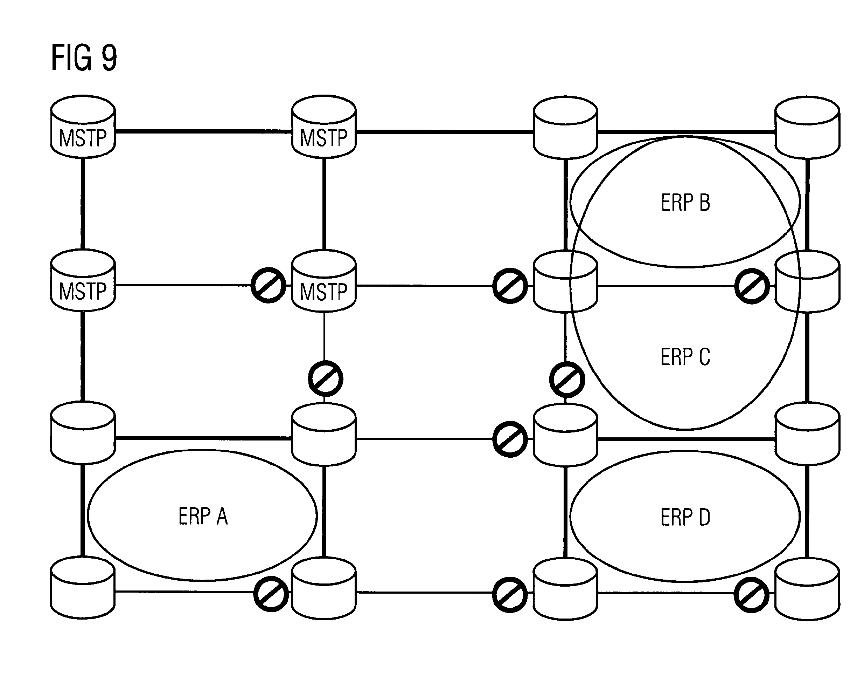

This leads to ring protection as shown in **Fig.9:** Various rings ERP A, ERP B, ERP C and ERP D are identified that may act according to the Ethernet ring protection protocol.

**Claims**

1. A method for ring protection of a network comprising the steps:

   - running a first method to identify at least one loop within the network;
   - a network component that is informed by the first method about a common network component that can be reached from the network component via different ports blocks one port and supports a ring protection.

**2.** The method according to claim 1, further comprising the steps:

- the network component requests a control VLAN from the common network component;
- the common network grants the control VLAN;
- the network component informs intermediate network components located in a path between the network component and the common network component about the network component.

**3.** The method according to claim 2, wherein the network component conveys the following information to the intermediate network components:

- the control VLAN;
- a primary port of the network component;
- a secondary port of the network component.

**4.** The method according to claim 3, wherein further an information of an instance, in particular of a set of VLANs, is conveyed from the network component to the intermediate network components.

**5.** The method according to any of claims 3 or 4, wherein the network component receives acknowledges from intermediate network components.

**6.** The method according to claim 5, wherein the network component sends test packets via the control VLAN to the intermediate network components and to the common network component.

**7.** The method according to any of the preceding claims, wherein the first method operates according to a spanning tree protocol (STP), in particular a multiple spanning tree protocol or a rapid spanning tree protocol (RSTP).

**8.** The method according to any of the preceding claims, wherein the method is used for configuration, set-up, maintenance and/or operation of the network.

**9.** The method according to any of the preceding claims, wherein the network component, the common network component and/or the intermediate network component is/are of the following type:

- a switch;
- a router;
- a gateway.

**10.** A device used for ring protection comprising a processor unit that is equipped such that the method according of any of the preceding claims is executable on said processor.

**11.** The device according to claim 10, wherein said device is a communication device, in particular a network component of the following type:

- a switch;
- a router;
- a gateway.

**12.** The device according to any of claims 10 or 11, wherein the device operates at least partially as a redundancy manager according to a ring protection protocol.

**13.** The device of claim 12, wherein the ring protection protocol is an Ethernet ring protection protocol.

**14.** Communication system comprising the device according to any of claims 10 to 13.

# FIG 1

```
┌─────────────────┐
│    Run MSTP     │───101
└─────────────────┘
         │
         ▼
┌─────────────────┐
│  Each NC adds MAC │───102
└─────────────────┘
         │
         ▼
┌───────────────────────────────┐
│ NC1 blocks port if common preceding │
│  NC is detected via different ports │───103
└───────────────────────────────┘
         │
         ▼
┌───────────────────────────────┐
│     NC1 requests control VLAN      │───104
└───────────────────────────────┘
         │
         ▼
┌───────────────────────────────┐
│ Common preceding NC grants control │
│              VLAN               │───105
└───────────────────────────────┘
         │
         ▼
┌───────────────────────────────┐
│     NC1 sends OAM packet to        │
│        intermediate NCs            │───106
└───────────────────────────────┘
         │
         ▼
┌─────────────────┐
│   ERP active    │───107
└─────────────────┘
```

# FIG 2

| | Octet |
|---|---|
| Protocol Identifier | 1-2 |
| Protocol Version Identifier | 3 |
| BPDU Type | 4 |
| CIST Flags | 5 |
| CIST Root Identifier | 6-13 |
| CIST External Path Cost | 14-17 |
| CIST Regional Root Identifier | 18-25 |
| CIST Port Identifier | 26-27 |
| Message Age | 28-29 |
| Max Age | 30-31 |
| Hello Time | 32-33 |
| Forward Delay | 34-35 |
| Version 1 Length=0 | 36 |
| Version 3 Length | 37-38 |
| MST Configuration Identifier | 39-89 |
| CIST Internal Root Path Cost | 90-93 |
| CIST Bridge Identifier | 94-101 |
| CIST Remaining Hops | 102 |
| MSTI Configuration Messages (may be absent) | 103-39+ Version 3 Length |
| Bridge MAC | 6 Octet |
| Bridge MAC | 6 Octet |
| Bridge MAC | 6 Octet |
| Bridge MAC | 6 Octet |

201

202

## FIG 3

NC
1

BPDU v.4

v.3
1

BPDU v.4

v.3
1

NC
2

NC
3

BPDU v.4

v.3
1
2

BPDU v.4

v.3
1
3

NC
4

NC
5

Switch Decides
to Block the port.

v.3
1
2
4

BPDU v.4

P1

P2

BPDU v.4

v.3
1
3
5

NC
6

FIG 4

NC 1

NC 2

NC 3

NC 4

NC 5

REQUEST CONTROL VLAN

GRANT CONTROL VLAN

P1

P2

NC 6

FIG 5

FIG 6

# FIG 7

FIG 8

FIG 9

**European Patent Office**

## EUROPEAN SEARCH REPORT

Application Number

EP 07 01 5304

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/171814 A1 (FLORIT LIONEL [US] ET AL) 26 July 2007 (2007-07-26)<br>* paragraph [0002] *<br>* paragraph [0013] *<br>* paragraph [0016] *<br>* paragraph [0022] *<br>* paragraph [0030] - paragraph [0032] *<br>----- | 1-14 | INV.<br>H04L12/56<br>H04L12/40<br>H04L12/46 |
| | | | TECHNICAL FIELDS SEARCHED (IPC)<br>H04L |

The present search report has been drawn up for all claims

| Place of search | Date of completion of the search | Examiner |
|---|---|---|
| Berlin | 16 January 2008 | Siebel, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 5304

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2008

| Patent document cited in search report | Publication date | Patent family member(s) | Publication date |
|---|---|---|---|
| US 2007171814 A1 | 26-07-2007 | WO 2007084696 A2 | 26-07-2007 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1062787 B1